# EUROPEAN PATENT SPECIFICATION

(11) **EP 2 193 979 B1**
(45) Date of publication and mention of the grant of the patent: **26.10.2011**
(21) Application number: 09015007.9
(22) Date of filing: 03.12.2009
(51) Int. Cl.: B62D 25/08, B62D 25/20

(54) **Vehicle body structure and manufacturing method of vehicle body**
Fahrzeugkarosserie und Herstellungsverfahren für die Fahrzeugkarosserie
Structure de carrosserie de véhicule et procédé de fabrication de cette carrosserie

(30) Priority: 08.12.2008 JP 2008312003; 08.12.2008 JP 2008312004
(43) Date of publication of application: 09.06.2010
(73) Proprietor: Mazda Motor Corporation, Aki-gun Hiroshima 730-8670 (JP)
(72) Inventor: Utsunomiya, Akinori, Aki-gun Hiroshima 730-8670 (JP); Tanaka, Chikara, Aki-gun Hiroshima 730-8670 (JP); Kitahara, Yoichiro, Aki-gun Hiroshima 730-8670 (JP); Honda, Masanori, Aki-gun Hiroshima 730-8670 (JP); Sasaki, Shin, Aki-gun Hiroshima 730-8670 (JP); Hashida, Takayuki, Aki-gun Hiroshima 730-8670 (JP)
(74) Representative: Müller-Boré & Partner Patentanwälte

(56) References cited:
- EP-A- 1 093 995
- US-A- 4 822 096

## Description

The present invention relates to a vehicle body structure and a manufacturing method of a vehicle body, in which a hollow vehicle-body frame and a vehicle-body panel are welded.

Conventionally, a vehicle body structure, in which a pair of front side frames is provided at both sides of a front portion of a vehicle body, and each of the front side frames has a slant portion which extends rearward and downward along a dash lower panel and a horizontal portion which is positioned at a rear end portion of the slant portion and extends rearward along a floor panel which forms a bottom of a vehicle compartment, is known as disclosed in Japanese Patent Laid-Open Publication No. 9-254818.

The shape of a cross section of the slant portion and the horizontal portion of the above-described front side frame when viewed in the longitudinal direction is of a U shape having an opening directed toward the side of the dash lower panel and the floor panel. Flanges are formed at both ends of the above-described opening, and these flanges are connected to the dash lower panel and the floor panel, respectively. Meanwhile, a front portion of the above-described front side frame arranged in an engine room has a closed cross section which has flanges at its upper and lower ends, and these flanges are connected to an apron panel or the like.

According to the vehicle body structure disclosed in the above-described publication, the slant portion and the horizontal portion of the front side frame arranged along the dash lower panel and the floor panel have a cross-section shape which is different from that of the front portion of the front side frame arranged in the engine room. Further, the flanges of the slant portion and the horizontal portion are connected to the dash lower panel and the floor panel, and the front portion of the front side frame is connected to the apron panel or the like via the flanges at its upper and lower ends. Accordingly, it may be difficult to form integrally the slant portion and the horizontal portion of the front side frame and the front portion of the front side frame. Therefore, it is generally executed to form separately the slant portion and the horizontal portion of the front side frame and the front portion of the front side frame, and then to weld these portions together.

However, in case the slant portion and the horizontal portion of the front side frame and the front portion of the front side frame are welded together after forming these separately as described above, it may be difficult to ensure the sufficiently-strong connection strength of the members. Therefore, the connection portion may tend to be deformed easily by an impact load which is inputted to the front side frame from a vehicle front body at a vehicle crash. Further, in case the front portion of the front side frame is comprised of a generally-known structure which has a closed-cross section with flanges, in which a pair of members which has a U-shaped cross section and flanges at its both-side ends, and these two members are connected via their flanges, there is a problem in that the connection portion of these flanges would be peeled off due to a torsional load inputted to the front side frame, so that the connection strength would decrease. Thus, a torsional deformation could not be properly prevented from occurring at the above-described apron frame at the frontal or offset crashes of an automotive vehicle and the like.

EP 1 093 995 A2 discloses a vehicle body structure according to the preamble of claim 1 comprising an extruded cross-member and a extruded floor.

The present invention has been devised based on the above-described problem, and an object to provide a vehicle body structure and a manufacturing method of a vehicle body which can have the superior strength.

The object is solved by the vehicle body structure and the manufacturing method of a vehicle body according to the present invention of the independent claims. Preferred embodiments of the present invention are subject of the dependent claims.

According to the present invention, there is provided a vehicle body structure, comprising a flangeless hollow vehicle-body frame which has a (preferably substantially rectangular) substantially closed cross section, a vehicle-body panel welded to the vehicle-body frame, a temporary connection portion temporarily connecting a face of the vehicle-body frame to the vehicle-body panel, the temporary connection portion comprising a plural connection points which is arranged substantially along a longitudinal direction of the vehicle-body frame, and a welding portion (preferably a laser welding portion) connecting the face of the vehicle-body frame to the vehicle-body panel by welding (preferably by a laser welding), the (preferably laser) welding portion comprising a pair of continuous welding rows which is arranged at separate points located near both-side ends of the face of the vehicle-body frame, wherein the vehicle-body panel has a concave portion at an intermediate (preferably substantially central) portion thereof between the separate points of the laser welding portion, the concave portion being concaved toward one side which is substantially opposite to a disposition side of the vehicle-body frame and extending in the longitudinal direction of the vehicle-body frame, and the temporary connection portion is arranged beside the concave portion of the vehicle-body panel.

According to the present invention, the vehicle body structure having the superior strength, in which the flangeless hollow vehicle-body frame having the (preferably substantially rectangular) closed cross section and the vehicle-body panel are welded together, can be provided.

Further, the thermal stress which may occur when the vehicle-body panel and the vehicle-body frame are welded can be absorbed at the concave portion properly, so that any improper warp of the vehicle-body panel which may be caused by the thermal stress can be prevented effectively.

According to another embodiment of the present invention, the vehicle-body frame comprises first and second members which have a substantially U-shaped cross section and are connected to each other via a connection end portion thereof, a specified face of the vehicle-body frame which contains one of the connection end portions of the first and second members constitutes the face of the vehicle-body frame to be connected to the vehicle-body panel, and the concave portion of the vehicle-body panel has a size of width which substantially corresponds to the connection end portion of the first and second members. Thereby, the forming of the temporary connection portion and particularly the laser welding can be properly conducted in the state in which the specified face of the vehicle-body frame containing the connection end portions of the first and second members contacts the vehicle-body panel and the connection end portions are positioned into the concave portion of the vehicle-body panel. Further, the vehicle-body frame, such as a front side frame which extends in a curve shape when viewed from the side of a vehicle, can be easily formed merely by connecting the respective connection end portions of the first and second members. Moreover, the vehicle-body frame, such as the front side frame, and the vehicle-body panel, such as a dash panel arranged at a rear end portion of an engine room, can be connected easily and properly in the state in which they are temporarily connected.

According to another embodiment of the present invention, the temporary connection portion is arranged at both sides of the concave portion. Thereby, since the vehicle-body frame and the vehicle-body panel are temporarily connected so that the temporary connection portion can have its properly-controlled wide distance and the (preferably laser) welding portion is formed near this temporary connection portion, the quality of the welding can be improved effectively.

According to another embodiment of the present invention, the first and second members form a front side frame of the vehicle-body frame which extends in a curve shape when viewed from the side of a vehicle. Thus, the front side frame which extends in the curve shape when viewed from the side of the vehicle, can be easily formed merely by connecting the respective connection end portions of the first and second members.

According to another embodiment of the present invention, the temporary connection portion is formed by an arc welding which connects the vehicle-body frame to the vehicle-body panel via small through holes formed at the vehicle-body panel. Thereby, the hollow vehicle-body frame and the vehicle-body panel can be temporarily connected with an arc welding device which is arranged on one side of the vehicle-body panel. Accordingly, even in case it is difficult that a spot welding e.g. with a normal spot-welding device is conducted because of a considerably large size of the vehicle-body panel, the vehicle-body panel and the vehicle-body frame can be connected properly, thereby forming the vehicle body having the superior strength easily and properly.

According to another embodiment of the present invention, the temporary connection portion is formed by a one-side spot welding which is applied from one side of the vehicle-body panel. Thereby, the hollow vehicle-body frame and the vehicle-body panel can be temporarily connected with a one-side spot-welding device which is arranged on the side of the vehicle-body panel. Accordingly, even in case it is difficult that the spot welding with the normal spot-welding device is conducted because of the considerably large size of the vehicle-body panel, the vehicle-body panel and the vehicle-body frame can be connected properly, thereby forming the vehicle body having the superior strength easily and properly.

According to another embodiment of the present invention, the concave portion of the vehicle-body panel has a cross section which is of a substantially trapezoid shape. Thereby, in case the thermal stress which may cause deformation of expansion and contraction at the temporary welding and/or the laser welding occurs, it can be absorbed effectively at the concave portion, so that any improper warp of the vehicle-body panel which may be caused by the thermal stress can be prevented surely.

According to another embodiment of the present invention, the above-described small through holes are arranged zigzag or laterally displaced with respect to each other substantially along the longitudinal direction of the vehicle-body frame. Thereby, the properly-wide disposition distance of the small through holes can be ensured even in case the width of the vehicle-body frame is small. Accordingly, any improper thermal influence which may be caused at the temporary connection of the vehicle-body frame to the vehicle-body panel can be effectively prevented from acting on the temporary connection portion via the small through holes, thereby providing the proper temporary connection of the members.

According to another embodiment of the present invention, the vehicle-body panel is a dash upper panel which is provided at a rear end portion of an engine room, and the vehicle-body frame is a dash cross member which is provided along the dash upper panel so as to extend in a vehicle width direction. Thereby, the hollow vehicle-body frame and the vehicle-body panel can be welded particularly with a laser-welding device which is arranged in front of the dash panel. Accordingly, even in case it is difficult that the spot welding with the spot-welding device is conducted because of the considerably large size of the vehicle-body panel, the dash panel and the dash cross member can be connected properly, thereby forming the vehicle body having the superior strength easily and properly.

According to another aspect of the present invention, there is provided a manufacturing method of a vehicle body which includes a flangeless hollow vehicle-body frame which has a (preferably substantially rectangular) closed cross section and a vehicle-body panel which is welded to the vehicle-body frame, comprising a step of forming plural small through holes at a welded portion of the vehicle-body panel to the vehicle-body frame along a longitudinal direction of the vehicle-body frame, a step of temporarily connecting the vehicle-body frame to the vehicle-body panel via the small through holes, and a step of connecting the vehicle-body frame to the vehicle-body panel by welding, such as a laser welding, which is applied to a specified (predetermined or predeterminable) portion along the small through holes formed in said small-through-hole forming step, wherein the vehicle-body panel is formed to have a concave portion at an intermediate (preferably substantially central) portion thereof between said separate points of the welding portion, the concave portion being concaved toward one side which is substantially opposite to a disposition side of said vehicle-body frame and extending in the longitudinal direction of the vehicle-body frame, and said temporary connection portion is arranged beside said concave portion of the vehicle-body panel. This aspect of the present invention can provide substantially the same functions and advantages as those of the above-described invention of the vehicle body structure.

According to another embodiment of the present invention, the temporary connection portion is formed to be arranged at both sides of said concave portion.

According to another embodiment of the present invention, the temporary connection portion is formed by an arc welding which connects the vehicle-body frame to the vehicle-body panel via small through holes formed at the vehicle-body panel and/or by a one-side spot welding which is applied from one side of the vehicle-body panel.

Other features, aspects, and advantages of the present invention will become apparent from the following description which refers to the accompanying drawings. It should be understood that even though embodiments are separately described, single features thereof may be combined to additional embodiments.
FIG. 1 is a perspective view showing a first embodiment of a vehicle body structure according to the present invention.
FIG. **2** is an explanatory elevation view of a dash panel.
FIG. **3** is a sectional view taken along line III-III of FIG. **2****.**
FIG. **4** is an exploded diagram showing a specific structure of a front side frame.
FIG. **5** is a sectional view taken along line V-V of FIG. **3****.**
FIG. **6** is a perspective view showing a connection state of the dash panel and the front side frame.
FIG. **7** is an explanatory elevation view of the dash panel.
FIG. **8** is a sectional view showing an attachment state of a dash cross member.
FIG. **9** is a sectional view showing a comparative example of the present invention.
FIG. **10** is a sectional view showing an operation of the present invention.
FIG. **11** is a sectional view taken along line XI-XI of FIG. **2****.**
FIG. **12** is a perspective view showing a second embodiment of a vehicle body structure according to the present invention, which corresponds to FIG. **6****.**
FIG. **13** is a sectional view showing a connection step of the dash panel and the front side frame.

Hereinafter, preferred embodiments of the present invention will be described referring to the accompanying drawings.

### EMBODIMENT 1

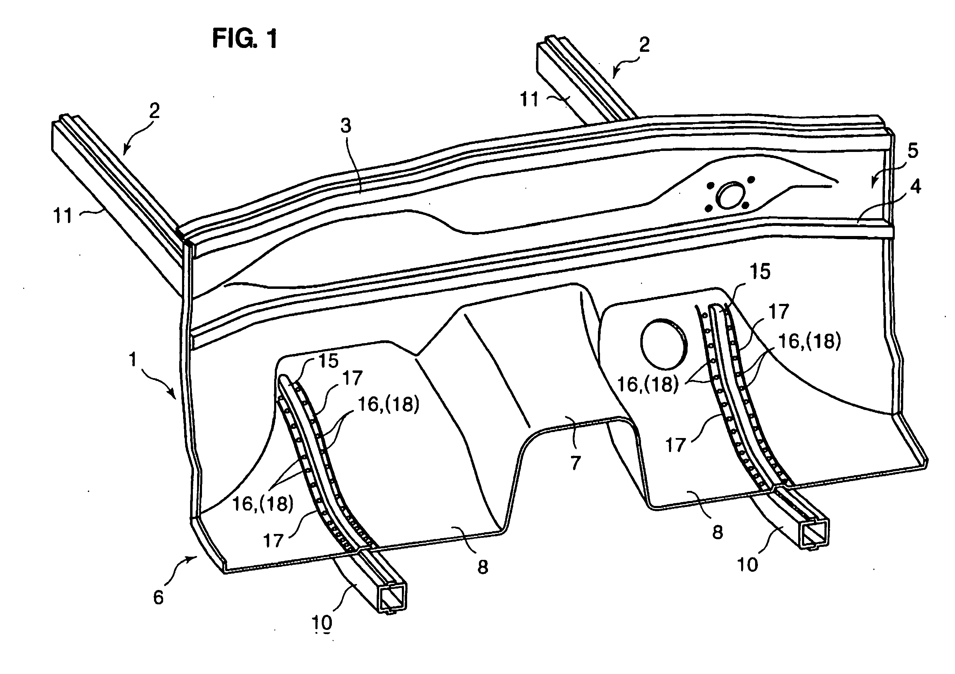

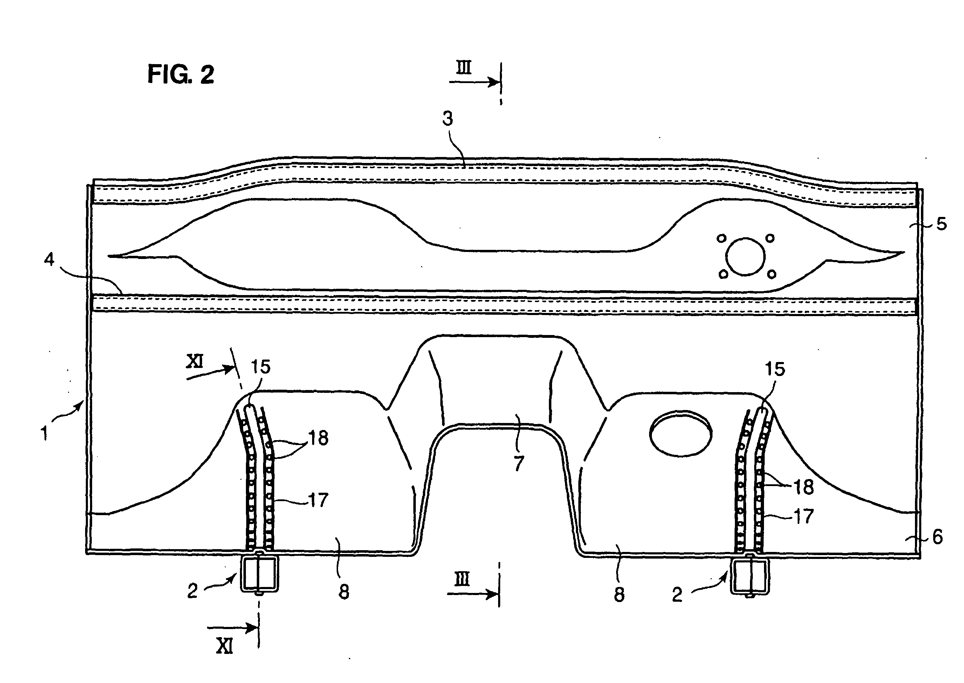

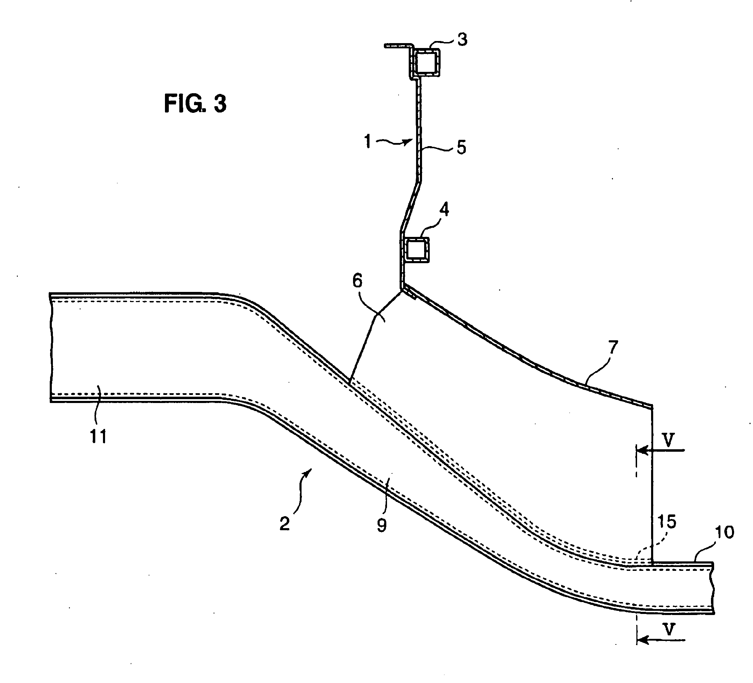

FIGS. **1** through **3** show a first preferred embodiment of a vehicle body structure according to the present invention. This vehicle body structure comprises a vehicle-body panel of a dash panel **1** which at least partly partitions a vehicle compartment from an engine room and a vehicle-body frame of a pair of front side frames **2** which extends substantially forward from (or from near) both sides of the dash panel **1.** An upper dash cross member **3** and a lower dash cross member **4** which is located below the upper dash cross member **1** are arranged on an inside wall face, i.e., a back face of the dash panel **1** so as to extend substantially in a vehicle width direction, respectively.

The dash panel **1** comprises a dash upper panel **5** which substantially extends in the vehicle width direction along a cowl box, not illustrated, and a dash lower panel **6** which substantially extends downward from a lower end of the dash upper panel **5.** A floor panel (not illustrated) which forms a bottom face of the vehicle compartment is provided in such a manner that its front end connects to a lower end of the dash lower panel **6.** A tunnel portion **7** which projects substantially upward is formed at the center of a lower portion of the dash lower panel **6,** and a step- or kick-up portion **8** which rises obliquely is formed particularly on the both sides of tunnel portion **7.** The above-described front side frames **2** are connected to each lower face of the kick-up portion **8.**

Each of the front side frames **2** substantially comprises a slant portion **9,** a horizontal portion **10,** and a front portion **11.** The slant portion **9** extends substantially forward and upward along the kick-up portion **8** formed at or near the lower portion of the dash lower panel **6** and then substantially forward off the dash panel **1.** The horizontal portion **10** extends rearward substantially horizontally from a rear end of the slant portion **9.** The front portion **11** substantially extends forward from a front end of the slant portion **9.** Thus, the front side frame **2** extends in a curve shape in a side view.

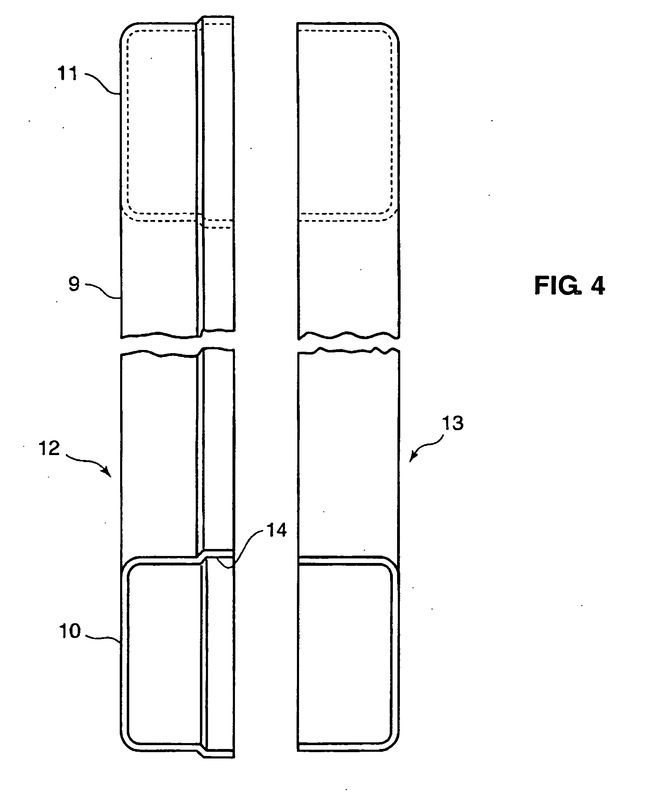

The front side frame **2** is comprised of a flangeless hollow member having a (preferably substantially rectangular) closed cross section, which is made of one or more, preferably a pair of metal first and second members **12, 13** (which particularly have a U-shaped cross section) particularly made by a press process and are connected to each other, for example, as shown in FIG. **4****.** The first member **12** which is positioned on the outside has a pair of step portions **14** which projects outwardly at its upper wall end and its lower wall end. Herein, the second member **13** is coupled to the first member **12** in such a manner that an upper or distal wall end and a lower or distal wall end of the second member **13** substantially slide along respective inner faces of the step portions **14.** A laser welding is applied to these overlapped coupling portions to connect the first and second members **12, 13,** so that the front side frame **2** with the slant portion **9,** the horizontal portion **10,** and the front portion **11** can be formed.

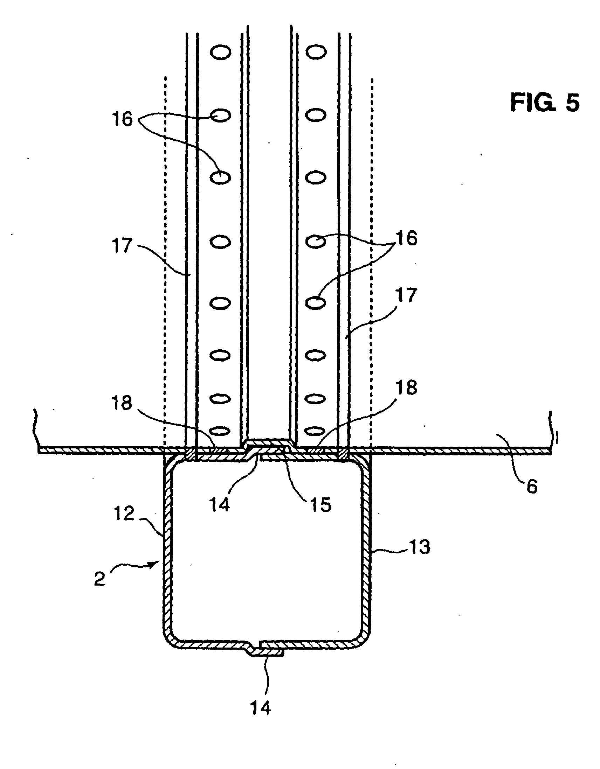

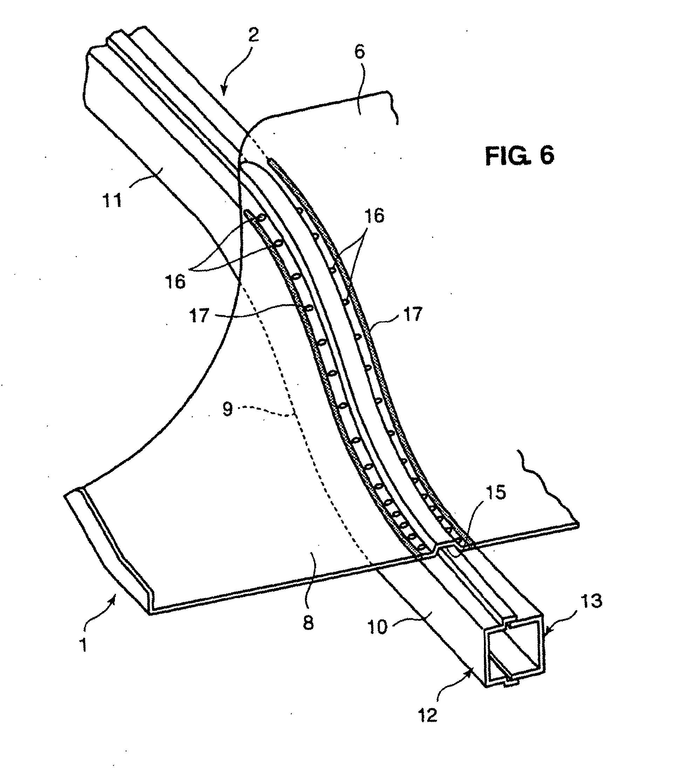

A concave portion **15** is formed at the kick-up portion **8** of the dash lower portion **6** to which the slant portion **9** and the horizontal portion **10** of the front side frame **2** are to be welded as shown in FIGS. **5** and **6****.** Herein, the concave portion **15** is formed so as to be concaved upwardly, i.e., toward one side which is opposite to a disposition side of the front side frame **2,** and to extend in the longitudinal direction of the front side frame **2,** i.e., the disposition direction of the above-described slant portion **9.** At both sides of the concave portion **15** is arranged a temporary connection portion **16** which at least temporarily connects the slant portion **9** and the horizontal portion **10** of the front side frame **2.**

Further, near the above-described temporary connection portion **16** is arranged a welding portion **17** (particularly a laser welding portion 17) which connects the dash lower panel **6** and the front side frame **2.** Its welding rows extend substantially in the longitudinal direction of the front side frame **2.** This laser welding portion **17** is formed in such a manner that the laser beams is irradiated to a specified (predetermined or predeterminable) portion of the panel **6** to be welded and this specified (predetermined or predeterminable) portion is molten by the energy of the laser beams irradiated. It should be understood, however, that while it is preferred that laser welding is applied, the present invention is not limited to laser welding and that any other welding process (such as spot welding) may be applied to the welding portion **17.** Further, the above-described laser welding portion **17** may be formed by using a wire laser-welding device which feeds a wire to the above-described specified portion to be welded to support the welding with this molten wire.

The concave portion **15** of the dash lower panel 6 has the cross section which particularly is of a substantially trapezoid shape and/or the size of width which corresponds to the connection end portion of the step portion **14** of the first and second members **12, 13.** Specifically, the width and/or the depth of the concave portion **15** preferably are set to be slightly greater than the width and/or the height of the above-described connection end portion of the front side frame **2.** Herein, in a state in which the connection end portion (step portion **14**) of the first and second members **12, 13** of the front side frame **2** is positioned into the concave portion **15** of the dash lower panel **6** of the dash panel **1,** the temporary connection portion **16** is formed in a below-described manner. After this, the above-described laser welding portion **17** is formed. Thereby, the front side frame **2** is connected to the lower face of the kick-up portion **8.**

That is, plural small through holes **18** which have the diameter in a range of about 2 to about 7 mm (particularly of about 5 mm) are formed at (preferably substantially regular) intervals or at a (preferably substantially regular) pitch on the both sides of the concave portion **15** of the kick-up portion **8** of the dash lower panel **6.** The peripheral portion equipped with these small through holes 18 is temporarily connected to the connection face of the front side frame **2,** specifically, to the upper face of the above-described slant portion **9** and horizontal portion **10** which contains the connection end portion of the above-described step portion **14** by the arc welding. Thus, the temporary connection portion **16** which temporarily connects the dash panel 1 and the front side frame **2** is configured to form two connection rows which are arranged along the longitudinal direction of the front side frame **2.**

Herein, the disposition distance of these two rows of small through holes **18** is set to be a specified value or greater so that an improperly large gap, for example, 0.5mm or greater, can be prevented from occurring between the slant portion **9** of the front side frame **2** and the kick-up portion **8** of the dash lower panel **6,** which may be caused by the warp of the dash lower panel **6** due to the thermal influence by the temporary connection of the dash lower panel **1** and the front side frame **2** with the arc welding. Meanwhile, the disposition distance of these two rows of small through holes **18** is set to be another specified (predetermined or predeterminable) value or smaller so that the gap between the slant portion **9** of the front side frame **2** and the kick-up portion **8** of the dash lower panel **6** can be prevented from increasing due to the thermal influence by the laser welding.

Then, the laser welding is applied to the specified (predetermined or predeterminable) portions of the kick-up portion **8** of the dash lower panel **6** near the both-side ends of the front side frame **2** along the disposition points of the small through holes **18** which at least partly form the temporary connection portion **16.** Thereby, two rows of laser welding portion **17** which connects the first and second members **12, 13** of the front side frame **2** to the kick-up portion **8** of the front side frame **2** are formed on the outside of the temporary connection portion **16,** i.e., at the position located on a side which is opposite to a disposition side of the concave portion **15.**

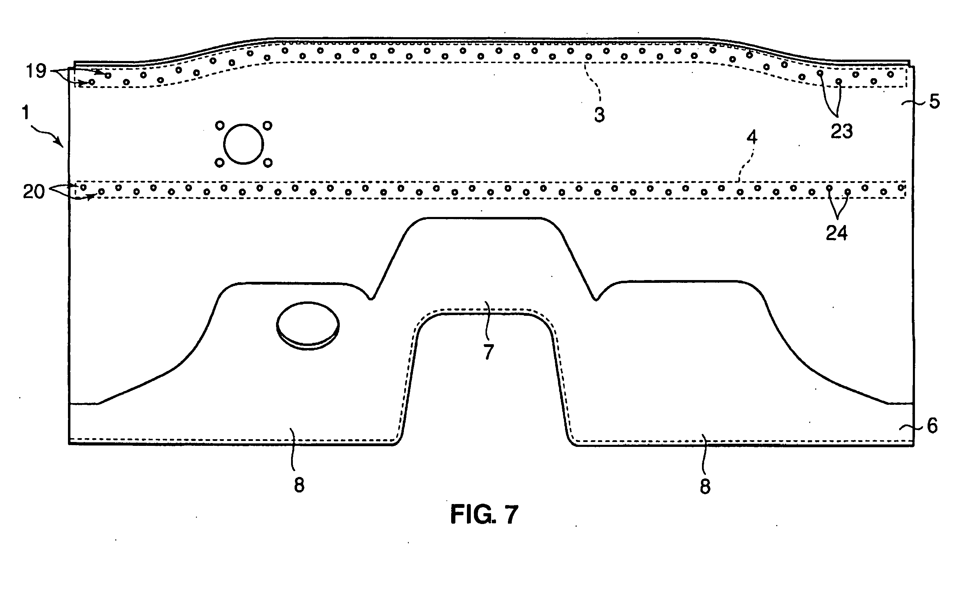

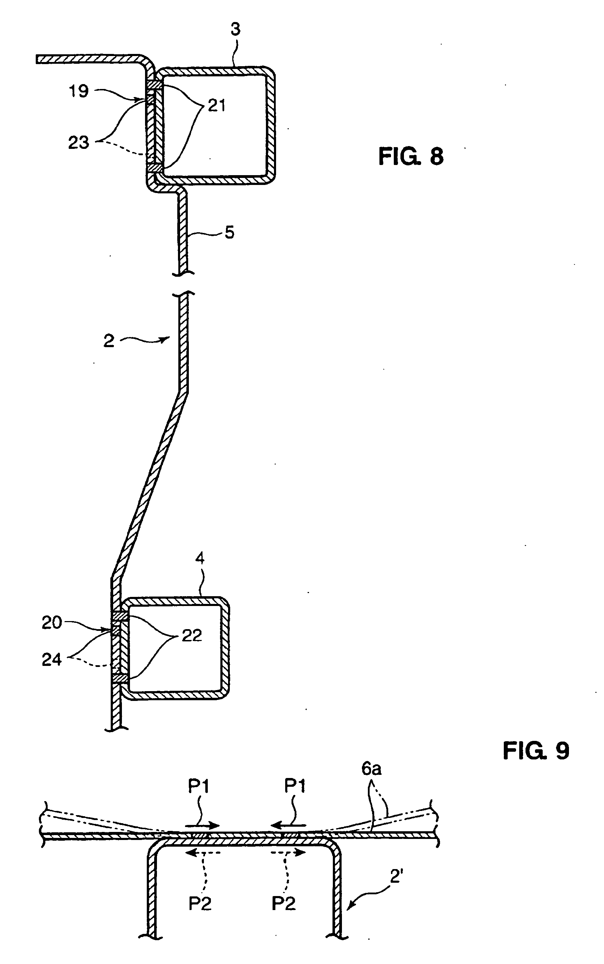

As shown in FIGS. **7** and **8****,** the upper dash cross member **3** and the lower dash cross member **4** which are welded to the dash upper panel **5** as the vehicle-body frame are formed as a hollow member respectively which particularly is made of a flangeless (preferably substantially square) pipe or the like having a closed cross section. The dash upper panel **5** has temporary portions **19, 20** to which the upper and lower dash cross member **3, 4** are temporarily connected. Further, laser welding portions **21, 22** which connect the dash upper panel **5** and the upper and lower dash cross members **3, 4** are formed near the temporary connection portions **19, 20** with their welding rows extending substantially along the longitudinal directions of these cross members.

Thus, many small through holes **23** (particularly with the diameter of about 5mm) are formed at an upper side portion of the dash upper panel **5** substantially along the longitudinal direction of the upper dash cross member **3** at regular intervals. Herein, these small holes **23** particularly are formed zigzag so as to be laterally displaced with respect to each other e.g. to have two welding rows of an upper row and a lower row. A temporary connection portion **19** which temporarily connects the upper dash cross member **3** to the back face of the upper side portion of the dash upper panel 5 via the small through holes **23** is formed particularly by applying the arc welding to this area. Meanwhile, the two rows of laser welding portions **21** which connect the upper dash cross member **3** to the upper side portion of the dash upper panel 5 are formed at positions located on the both sides of the temporary connection portion **19,** i.e., above and below the temporary connection portion **19,** along the longitudinal direction by applying the laser welding to these areas.

Likewise, many small through holes **24** are formed at a lower portion of the dash upper panel **5** substantially along the longitudinal direction of the lower dash cross member **4** preferably at substantially regular intervals or pitch. Herein, these small holes **24** particularly are formed zigzag so as to be laterally displaced with respect to each other e.g. to have two welding rows. A temporary connection portion **20** which at least temporarily connects the lower dash cross member **4** to the lower portion of the dash upper panel **5** via the small through holes **24** is formed by applying the arc welding to this area. Meanwhile, the two rows of laser welding portions **22** which connect the lower dash cross member **4** to the lower portion of the dash upper panel **5** are formed at positions located on the both sides of the temporary connection portion **20** along the longitudinal direction by applying the laser welding to these areas.

In manufacturing the front vehicle body, as shown in FIGS. **5** and **6****,** the hollow front side frame **2** with the flangeless structure having the substantially closed cross section is formed by connecting the respective end portions of the first and second members **12, 13.** Further, the plural small through holes **18** are formed at the portion of the dash panel **1** to which the front side frame **2** is welded, i.e., on the both sides of the dash lower panel **6,** along the disposition direction of the front side frame **2** particularly at substantially regular intervals or pitch. Moreover, the plural small through holes **23, 24** are formed at the upper side portion and the lower portion of the dash panel **1** substantially along the disposition direction of the upper and lower dash cross members **3, 4** particularly at regular intervals or pitch.

Then, as shown in FIGS. **7** and **8****,** in the state in which the square-pipe upper and lower dash cross members **3, 4** are located contacting the back face of the dash upper panel **5** at the position substantially corresponding to the small through holes **23, 24,** the arc welding is applied from the front side of the dash panel **1** such that the holes **23, 24** are filled with the molten metal generated by the arc welding. Thereby, the dash upper panel **5** and the upper and lower dash cross members **3, 4** are temporarily connected via the small through holes **23, 24.** Further, as shown in FIGS. **5** and **6****,** in the state in which the connection end portions of the first and second members **12, 13** are positioned into the concave portion **15** of the dash lower panel **6** and the upper face of the slant portion **9** of the front side frames **2** is positioned at the disposition portion of the small holes **18** of the dash lower panel **6,** the arc welding is applied from the upper rear side of the dash lower panel **6** such that the holes **18** are filled with the molten metal generated by the arc welding. Thereby, the dash lower panel **6** and the front side frames **2** are temporarily connected via the small through holes **18.**

After the vehicle body comprising the dash panel **1,** front side frames **2,** upper and lower dash cross members **3, 4,** so on are temporarily assembled as described above, it is conveyed to a laser welding section where the laser-welding device is arranged. In this section, the portions near the both sides of each of the front side frames **2** are welded to the dash panel **1** by applying the laser welding from the upper rear side of the dash lower panel **6** along the disposition position of the small through holes **18.** Further, the portions near the upper and lower sides of each of the upper and lower dash cross members **3, 4** are welded to the dash panel **1** by applying the laser welding from the front side of the dash upper panel **5** along the disposition position of the small through holes **23, 24.**

As described above, in the vehicle body structure in which the vehicle-body frame of a pair of hollow front side frames **2** with the flangeless structure having the (preferably substantially rectangular) closed cross section and the vehicle-body panel of the dash panel **1** are welded, the concave portion **15** is formed at the specified (predetermined or predeterminable) portion of the dash panel **1** to which each of the front side frames **2** is welded so as to be concaved toward one side which is opposite to the disposition side of the front side frame **2** and substantially extends in the longitudinal direction of the front side frame **2,** the temporary connection portion **16** which temporarily connects the front side frame **2** to the portion of the dash panel **1** which substantially corresponds to the concave portion **15,** and the laser welding portion **17** which connects the front side frame **2** to the dash panel **1** with the laser welding is formed near the temporary connection portion **16** so as to extend substantially along the longitudinal direction of the front side frame **2.** Accordingly, the vehicle body structure having the superior strength can be provided easily and properly.

That is, according to the present embodiment, the front side frame **2** with the closed cross section has the slant portion **9,** the horizontal portion **10,** and the front portion **11** which are integrally formed so as to extend continuously in the curve shape when viewed from the side the vehicle by connecting the respective end portions of the first and second members **12, 13** which particularly have the substantially U-shaped cross section. Accordingly, the impact load can be properly transmitted toward the rear portion of the vehicle body and thereby supported effectively, without providing any improper deformation caused by the impact load, which may be generated in the conventional structure in which the slant portion 9, the horizontal portion **10,** and the front portion **11** are previously formed separately and then they are connected together.

Further, according to the above-described structure, the strength against the torsional load acting on the front side frame **2** can be improved effectively and thereby the torsional deformation of the front side frame **2** can be restrained effectively, without providing any problem of the conventional structure in that the connection portion of the connection flanges of the front side frame may be peeled off due to the torsional load inputted to the front side frame and thereby the strength may decrease.

Further, the concave portion **15** is formed at the specified (predetermined or predeterminable) portion of the dash panel **1** to which the front side frame **2** is welded so as to be concaved toward one side opposite to the disposition side of the front side frame **2** (i.e., upward) and substantially extend along the longitudinal direction of the front side frame **2,** and the laser welding portion **17** is formed in the state in which the front side frame 2 is temporarily connected to the dash panel **1.** Accordingly, even in case it is difficult that the spot welding e.g. with a normal spot-welding device is conducted, the front side frame **2** and the dash panel **1** can be connected easily and firmly with the laser-welding device which may be arranged on one side of the dash panel **1.**

Moreover, when the peripheral portion of the dash panel **1** with the small through holes **18** is temporarily connected to the upper face of the front side frame **2** by the arc welding or the dash panel **1** and the front side frame are connected particularly by the laser welding which is applied near the temporary connection portion **16** substantially along the longitudinal direction of the front side frame **2,** any difference in the thermal influence can be prevented from occurring between these members and thereby any improper warp can be properly prevented from occurring at the dash panel **1.**

For example, when the peripheral portion of the dash lower panel **6** with the small through holes **18** are connected to the upper face of the front side frame **2** by the arc welding, the heat is generated. This generated heat increases the temperature of the dash lower panel **6** to be higher than that of the front side frame **2,** so that the dash lower panel **6** is made expand. Herein, after the both members are temporarily connected in this state, these members are cooled down e.g. substantially to the room temperature. In this case, a greater contraction force acts on the dash lower panel 6 than the one acting on the front side frame **2.** Accordingly, in case the above-described concave portion **15** is not formed at a dash lower panel **6'** as shown in FIG. **9****,** after the temporary arc welding, the dash lower panel **6'** may have a warp deformation off a front side frame **2'** as shown by a two-dotted broken line in this figure, which is caused by a thermal stress **P1** acting in the direction of contraction of the dash lower panel **6'** and a stress **P2** which occurs at the front side frame **2'** against the thermal heat **P1.** Thereby, a rather large gap may be inevitably generated between the dash lower panel **6'** and the front side frame **2'.**

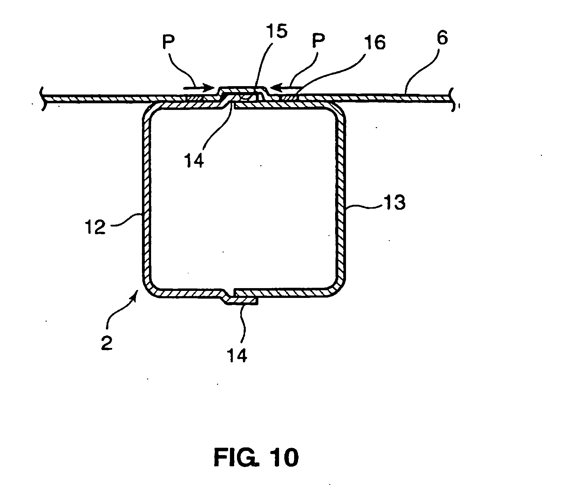

In contrast, in case the concave portion **15** is formed at the welding portion of the dash panel **1** to which the front side frame **2** is welded as shown in FIG. **10****,** when a thermal stress **P** to make the dash lower panel **6** contract largely than the front side frame **2** acts according to the temperature decrease after the temporary arc welding, the above-described concave portion **15** can have a resilient deformation to absorb the above-described thermal stress **P.** Accordingly, it can be prevented that the large stress to cause the improper warp to the dash lower panel **6** is generated, so that the dash lower panel **6** can be effectively restrained from being peeled off the front side frame **2.**

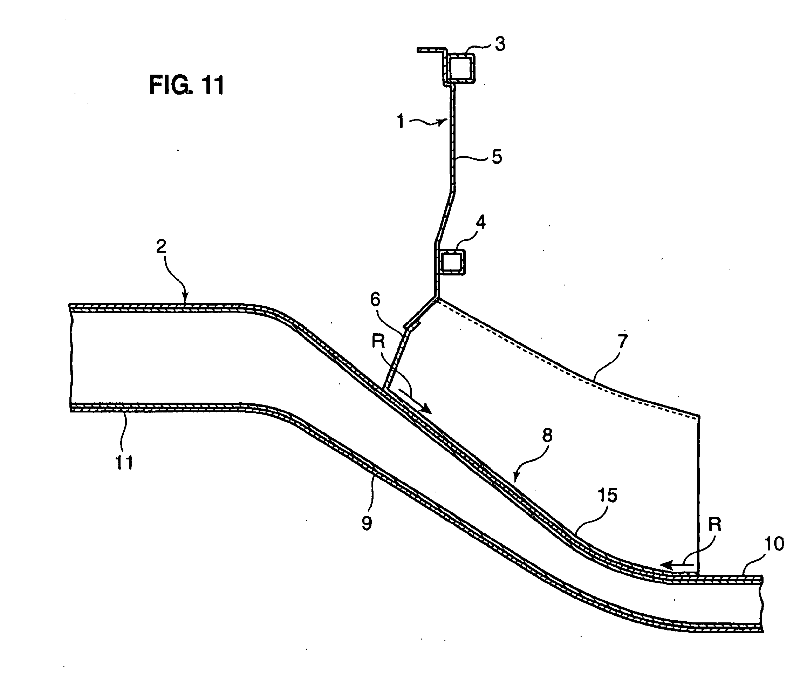

Further, when the dash lower panel **6** and the front side frame **2** are connected by the laser welding, the heat is generated. This generated heat increases the temperature of the dash lower panel **6** to be higher than that of the front side frame **2.** Herein, after the both members are welded in this state, these members are cooled down. In this case, a thermal stress to make the dash lower panel **6** contract largely than the front side frame **2,** that is, a thermal stress **R** to cause the warp deformation to front and rear portions of the kick-up portion **8** of the dash lower panel **6** acts as shown in the side view of FIG. **11****.** However, the concave portion **15** formed at the dash panel **1** functions as a reinforcing member against the above-described thermal stress **R,** so that the above-described warp due to the thermal stress **R** can be prevented from occurring effectively.

Moreover, according to the present embodiment, the laser welding portion **17** is arranged on the outside of the temporary connection portion **16** provided substantially along the concave portion **15** of the dash lower panel **6.** Accordingly, the laser welding portion can be formed properly in the state in which the gap between the dash lower panel **6** and the front side frame **2** is prevented from being about 0.5 mm or greater, for example. Thereby, despite the front side frame **2** with the flangeless structure having the substantially closed cross section, the quality of the laser welding is ensured properly so that the vehicle body having the superior strength can be formed easily.

Further, the vehicle-body frame of the front side frame **2** is formed by the first and second members **12, 13** which particularly have the U-shaped cross section and are connected to each other via the connection end portion, the specified face containing the step portion **14** of the first member **12** and the like constitutes the face of the front side frame **2** to be connected to the vehicle-body panel, and the concave portion **15** have the size of width which substantially corresponds to the connection end portion of the first and second members **12, 13.** Thereby, the forming of the temporary connection portion **16** and the laser welding portion **17** can be properly conducted by using the arc-welding device and the laser-welding device which are arranged on one side of the vehicle-body panel of the dash panel **1** in the state in which the above-described specified face substantially contacts the dash panel **1** and the above-described connection end portions are positioned into the concave portion **15.**

Further, the front side frame **2** which particularly has the slant portion **9,** the horizontal portion **10,** and the front portion **11** and substantially extends in the curve shape when viewed from the side of the vehicle can be formed easily merely by connecting the respective connection end portions of the first and second members **12, 13.** Moreover, the front side frame **2** and the dash panel **1** which is arranged at the rear end portion of the engine room can be connected easily and properly by forming the laser welding portion **17** with the laser welding in the state in which they are temporarily connected via the above-described small through holes **18.**

Moreover, according to the present embodiment, the temporary connection portion **16** is arranged on the both sides of the concave portion **15.** Thereby, since the vehicle-body frame of the front side frame **2** and the vehicle-body panel of the dash panel **1** are temporarily connected in the state in which the temporary connection portion **16** has its properly-controlled wide distance between its two rows, the gap between the front side frame **2** and the dash panel **1** can be managed properly. Then, the laser welding portion **17** is formed near this temporary connection portion, so that the quality of the welding can be improved effectively.

Additionally, the thermal strain which occurs when the temporary connection portion **16** is formed, that is, when the peripheral portion of the dash panel **1** with the small through holes **18** is connected to the front side frame **2** by the arc welding is absorbed by the above-described concave portion **15.** Thereby, the two rows of the temporary connection portion **16** can be located close to each other, and the flexibility of layout of the temporary connection portion **16** can be improved effectively.

Further, according to the present embodiment, the above-described temporary connection portion **16** is formed by the arc welding which connects the dash panel **1** and the front side frame **2** via the small through holes **18** which are formed at the vehicle-body panel of the dash panel **1** which is arranged at the rear end portion of the engine room. Thereby, the hollow vehicle-body frame of the front side frame **2** and the dash panel **1** can be temporarily connected with the arc-welding device which is arranged on one side of the dash panel **1.** Accordingly, even in case it is difficult that a spot welding e.g. with the normal spot-welding device is conducted because of a considerably large size of the dash panel **1,** the dash panel **1** and the front side frame **2** can be connected properly, thereby forming the vehicle body having the superior strength easily and properly.

Moreover, according to the present embodiment, the front side frame **2** and the dash panel **1** are connected by applying the laser welding to the vehicle-body panel of the dash panel **1** at the portion near the both side portions of the front side frame **2.** Thus, the laser welding portion **17** can be formed with the proper width distance between its two rows, so that the front side frame **2** can be connected to the dash panel **1** firmly. Accordingly, even if the torsional load acts on the front side frame **2,** the laser welding portion **17** can be prevented from being peeled off effectively. Further, the thermal influence which occurs when one of the rows of the laser welding portion **17** is formed can be restrained from acting on the other row of the laser welding portion **17.**

Further, according to the present embodiment, as shown in FIG. **10** and others, the concave portion **15** of the vehicle-body panel of the dash panel **1** has the cross section which particularly is of the trapezoid shape. Thereby, in case the thermal stress **P** which may cause deformation of expansion and contraction at the temporary welding or the laser welding occurs, it can be absorbed effectively at the concave portion **15.** Accordingly, the vehicle-body panel can be surely restrained from being peeled off the vehicle-body frame due to the above-described thermal stress **P.**

Herein, while the above-described embodiment shows the example in which the front side frame **2** is particularly comprised of the slant portion **9,** the horizontal portion **10,** and the front portion **11** which are formed integrally or unitarily, the present invention is applicable to a case in which the slant portion **9,** the horizontal portion **10,** and the front portion **11** may be formed separately and then they are connected particularly welded together. Further, while the above-described embodiment shows the example in which the peripheral portion of the vehicle-body panel with the small through holes **18** is temporarily connected to the welding face of the vehicle-body frame by means of the arc welding, any other connecting means, such as gas welding or brazing, may be used instead of the arc welding.

In a vehicle body structure in which a vehicle-body frame of front side frames **2** with a flangeless structure having a (preferably substantially rectangular) substantially closed cross section and a vehicle-body panel of a dash panel **1** are welded, a concave portion **15** is formed at a specified (predetermined or predeterminable) portion of the vehicle-body panel to which the vehicle-body frame is welded so as to be concaved toward one side which is substantially opposite to a disposition side of the vehicle-body frame and extends in its longitudinal direction, a temporary connection portion **16** which temporarily connects the vehicle-body frame to a side of the concave portion **15** is formed, and a (preferably laser) welding portion **17** which connects the vehicle-body frame to the vehicle-body panel is formed near the temporary connection portion **16** so as to extend along the longitudinal direction of the vehicle-body frame.

### EMBODIMENT 2

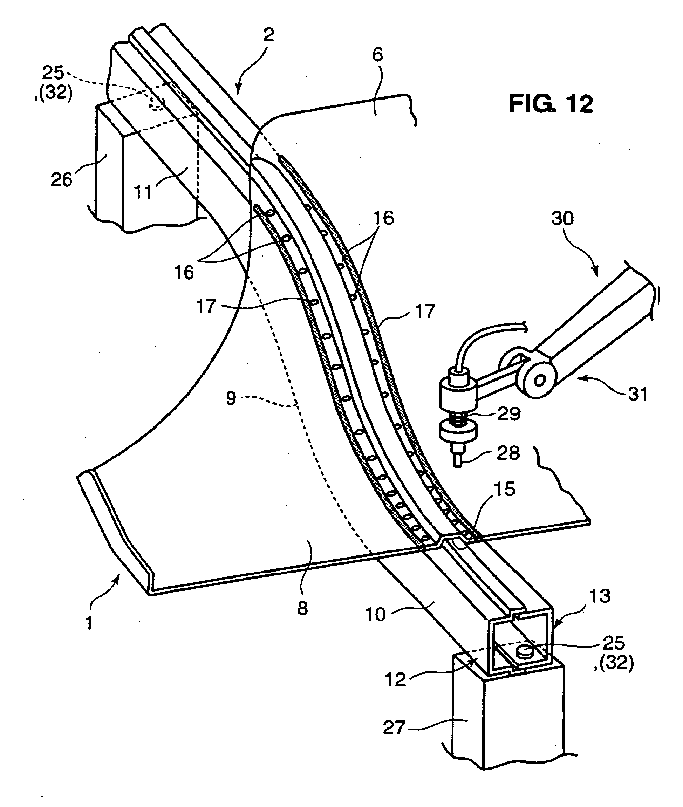

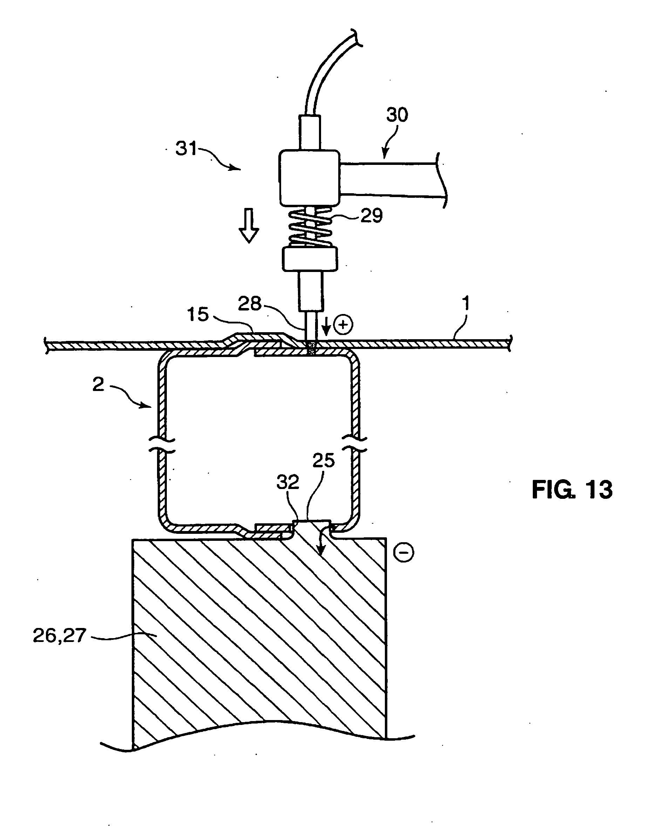

A second preferred embodiment of the present invention is shown in FIGS. 12 and 13. According to the second embodiment, the temporary connection portion 17 is formed by connecting the vehicle-body panel of the front side frame **2** and the vehicle-body panel of the dash panel **1** with a spot welding using a one-side spot-welding device **31.** This one-side spot-welding device **31** comprises a pair of ground jigs **26, 27** which have electrode projections **25** thereon, and a spot gun **30** which is equipped with a spot electrode **28** and a coil spring **29** which applies a specified pressing pressure to the spot electrode **28.**

Herein, the front side frame **2** is placed on the pair of ground jigs **26, 27** in such a manner that the electrode projections **25** of the ground jigs **26, 27** are inserted into ground holes **32** which formed at the bottom of the front side frame **2.** Thus, the front side frame **2** is supported in its positioning state. Herein, a coating film which covers the peripheral face of the ground holes **32** may be removed at need. Then, in a state in which the front side frame **2** and the ground jigs **26, 27** are coupled eclectically by making the electrode projections contact the peripheral face of the ground holes **32,** the spot electrode **28** of the one-side spot-welding device 30 is pressed against the specified portion of the dash panel **1** along and beside the concave portion **15** to supply the electricity. Thereby, the temporary connection portion **16** which connects the vehicle-body panel of the front side frame **2** and the vehicle-body panel of the dash panel **1** with the spot welding is formed so as to have plural welding points at regular intervals.

The present invention should not be limited to the above-descried embodiments, and any other modifications and improvements may be applied within the scope of the present invention, as defined by the appended claims.

## Claims

1. A vehicle body structure, comprising:
a flangeless hollow vehicle-body frame (**2; 3; 4**) which has a closed cross section;
a vehicle-body panel (**1**) welded to said vehicle-body frame (**2; 3; 4**);
a temporary connection portion (**16; 19; 20**) temporarily connecting a face of said vehicle-body frame (**2; 3; 4**) to said vehicle-body panel (**1**), the temporary connection portion (**16; 19; 20**) comprising a plural connection points which is arranged substantially along a longitudinal direction of the vehicle-body frame (**2; 3; 4**); and
a welding portion (**17; 21; 22**) connecting the face of said vehicle-body frame (**2; 3; 4**) to said vehicle-body panel (**1**) by welding such as laser welding, the welding portion (**17; 21; 22**) comprising a pair of continuous welding rows which is arranged at separate points located near both-side ends of the face of the vehicle-body frame (**2; 3; 4**),
**characterized in that** said vehicle-body panel (**1**) has a concave portion (**15**) at an intermediate portion thereof between said separate points of the welding portion (**17**), the concave portion (**15**) being concaved toward one side which is substantially opposite to a disposition side of said vehicle-body frame (**2**) and extending in the longitudinal direction of the vehicle-body frame (**2**), and said temporary connection portion (**16**) is arranged beside said concave portion (**15**) of the vehicle-body panel (**1**).

2. The vehicle body structure of claim 1, wherein said vehicle-body frame (**2**) comprises first and second members (**12, 13**) which have a U-shaped cross section and are connected to each other via a connection end portion thereof, a specified face of the vehicle-body frame (**2**) which contains one of the connection end portions of the first and second members (**12, 13**) constitutes said face of the vehicle-body frame (**2**) to be connected to the vehicle-body panel (**1**), and said concave portion (**15**) of the vehicle-body panel (**1**) has a size of width which substantially corresponds to said connection end portion of the first and second members (**12, 13**).

3. The vehicle body structure of claims 1 or 2, wherein said temporary connection portion (**16**) is arranged at both sides of said concave portion (**15**).

4. The vehicle body structure of claims 2 or 3, wherein said first and second members (**12, 13**) form a front side frame (**2**) of the vehicle-body frame which extends in a curve shape when viewed from the side of a vehicle.

5. The vehicle body structure of any one of claims 1 through 4, wherein said temporary connection portion (**16**) is formed by an arc welding which connects the vehicle-body frame (**2**) to the vehicle-body panel (**1**) via small through holes (**18**) formed at the vehicle-body panel (**1**).

6. The vehicle body structure of any one of claims 1 through 4, wherein said temporary connection portion (**16**) is formed by a one-side spot welding which is applied from one side of the vehicle-body panel (**1**).

7. The vehicle body structure of any one of claims 1 through 6, wherein said concave portion (**15**) of the vehicle-body panel (**1**) has a cross section which substantially is of a trapezoid shape.

8. The vehicle body structure of claim 1, wherein said temporary connection portion (**16; 19; 20**) is formed by an arc welding which connects the vehicle-body frame (**2; 3; 4**) to the vehicle-body panel (**1**) via small through holes (**18; 23; 24**) formed at the vehicle-body panel (**1**).

9. The vehicle body structure of claim 8, wherein said small through holes (**18; 23; 24**) are arranged zigzag substantially along the longitudinal direction of the vehicle-body frame (**2; 3; 4)**.

10. The vehicle body structure of claims 8 or 9, wherein said vehicle-body panel (**1**) is a dash upper panel (**5**) which is provided at a rear end portion of an engine room, and said vehicle-body frame is a dash cross member (**3; 4**) which is provided along the dash upper panel (**5**) so as to extend in a vehicle width direction.

11. A manufacturing method of a vehicle body which includes a flangeless hollow vehicle-body frame (**2; 3; 4**) which has a closed cross section and a vehicle-body panel (**1**) which is welded to the vehicle-body frame (**2; 3; 4**), comprising:
a step of forming plural small through holes (**18; 23; 24**) at a welded portion of the vehicle-body panel (**1**) to the vehicle-body frame (**2; 3; 4**) along a longitudinal direction of the vehicle-body frame (**2; 3; 4**);
a step of temporarily connecting the vehicle-body frame (**2; 3; 4**) to the vehicle-body panel (1) via the small through holes (**18; 23; 24**); and
a step of connecting the vehicle-body frame (**2; 3; 4**) to said vehicle-body panel (**1**) by welding such as laser welding, which is applied to a specified portion along the small through holes (**18; 23; 24**) formed in said small-through-hole forming step,
**characterized in that** said vehicle-body panel (**1**) is formed to have a concave portion (**15**) at an intermediate portion thereof between said separate points of the welding portion (**17**), the concave portion (**15**) being concaved toward one side which is substantially opposite to a disposition side of said vehicle-body frame (**2**) and extending in the longitudinal direction of the vehicle-body frame (**2**), and said temporary connection portion (**16**) is arranged beside said concave portion (**15**) of the vehicle-body panel (**1**).

12. The manufacturing method of claim 11, wherein said temporary connection portion (**16**) is formed to be arranged at both sides of said concave portion (**15**).

13. The manufacturing method of any one of claims 11 through 12, wherein said temporary connection portion (**16**) is formed by an arc welding which connects the vehicle-body frame (**2**) to the vehicle-body panel (**1**) via small through holes (**18**) formed at the vehicle-body panel (**1**) and/or by a one-side spot welding which is applied from one side of the vehicle-body panel (**1**).

## Patentansprüche

1. Fahrzeugkarosseriestruktur, die umfasst:
einen flanschlosen hohlen Fahrzeugkarosserierahmen (2; 3; 4), der einen geschlossenen Querschnitt hat;
ein Fahrzeugkarosserieblech (1), das an den Fahrzeugkarosserierahmen (2; 3; 4) geschweißt ist;
einen provisorischen Verbindungsabschnitt (16; 19; 20), der eine Seite des Fahrzeugkarosserierahmens (2; 3; 4) mit dem Fahrzeugkarosserieblech (1) provisorisch verbindet, wobei der provisorische Verbindungsabschnitt (16; 19; 20) mehrere Verbindungspunkte umfasst, die im Wesentlichen entlang einer Längsrichtung des Fahrzeugkarosserierahmens (2; 3; 4) angeordnet sind; und
einen Schweißabschnitt (17; 21; 22), der die Seite des Fahrzeugkarosserierahmens (2; 3; 4) durch Schweißen, wie etwa Laserschweißen, mit dem Fahrzeugkarosserieblech (1) verbindet, wobei der Schweißabschnitt (17; 21; 22) ein Paar kontinuierlicher Schweißreihen umfasst, das entlang getrennter Punkt angeordnet ist, die sich in der Nähe beider Seitenränder der Seite des Fahrzeugkarosserierahmens (2; 3; 4) befinden,
**dadurch gekennzeichnet, dass** das Fahrzeugkarosserieblech (1) einen konkaven Abschnitt (15) an seinem Zwischenabschnitt zwischen den getrennten Punkten des Schweißabschnitts (17) hat, wobei der konkave Abschnitt (15) in Richtung einer Seite, die im Wesentlichen entgegengesetzt zu einer Anordnungsseite des Fahrzeugkarosserierahmens (2) ist, gewölbt ist und sich in der Längsrichtung des Fahrzeugkarosserierahmens (2) erstreckt, und der provisorische Verbindungsabschnitt (16) neben dem konkaven Abschnitt (15) des Fahrzeugkarosserieblechs (1) angeordnet ist.

2. Fahrzeugkarosseriestruktur nach Anspruch 1, wobei der Fahrzeugkarosserierahmen (2) umfasst: erste und zweite Elemente (12, 13), die einen U-förmigen Querschnitt haben und über einen ihrer Verbindungsendabschnitte miteinander verbunden sind, wobei eine spezifizierte Seite des Fahrzeugkarosserierahmens (2), die einen der Verbindungsendabschnitte der ersten und zweiten Elemente (12, 13) enthält, diese Seite des Fahrzeugkarosserierahmens (2) bildet, die mit dem Fahrzeugkarosserieblech (1) verbunden werden soll, und der konkave Abschnitt (15) des Fahrzeugkarosserieblechs (1) eine Breitenabmessung hat, die im Wesentlichen dem Verbindungsendabschnitt der ersten und zweiten Elemente (12, 13) entspricht.

3. Fahrzeugkarosseriestruktur nach Anspruch 1 oder 2, wobei der provisorische Verbindungsabschnitt (16) auf beiden Seiten des konkaven Abschnitts (15) angeordnet ist.

4. Fahrzeugkarosseriestruktur nach Anspruch 2 oder 3, wobei die ersten und zweiten Elemente (12, 13) einen vorderen Seitenrahmen (2) des Fahrzeugkarosserierahmens bilden, der sich von der Seite eines Fahrzeugs betrachtet in einer gekrümmten Form erstreckt.

5. Fahrzeugkarosseriestruktur nach einem der Ansprüche 1 bis 4, wobei der provisorische Verbindungsabschnitt (16) durch Bogenschweißen ausgebildet wird, welches den Fahrzeugkarosserierahmen (2) über kleine Durchgangslöcher (18), die an dem Fahrzeugkarosserieblech (1) ausgebildet sind, mit dem Fahrzeugkarosserieblech (1) verbindet.

6. Fahrzeugkarosseriestruktur nach einem der Ansprüche 1 bis 4, wobei der provisorische Verbindungsabschnitt (16) durch einseitiges Punktschweißen ausgebildet wird, das von einer Seite des Fahrzeugkarosserieblechs (1) angewendet wird.

7. Fahrzeugkarosseriestruktur nach einem der Ansprüche 1 bis 6, wobei der konkave Abschnitt (15) des Fahrzeugkarosserieblechs (1) einen Querschnitt hat, der im Wesentlichen eine trapezförmige Form hat.

8. Fahrzeugkarosseriestruktur nach Anspruch 1, wobei der provisorische Verbindungsabschnitt (16; 19; 20) durch Bogenschweißen ausgebildet wird, das den Fahrzeugkarosserierahmen (2; 3; 4) über kleine Durchgangslöcher (18; 23; 24), die an dem Fahrzeugkarosserieblech (1) ausgebildet sind, mit dem Fahrzeugkarosserieblech (1) verbindet.

9. Fahrzeugkarosseriestruktur nach Anspruch 8, wobei die kleinen Durchgangslöcher (18; 23; 24) im Wesentlichen zickzackförmig entlang der Längsrichtung des Fahrzeugkarosserierahmens (2; 3; 4) angeordnet sind.

10. Fahrzeugkarosseriestruktur nach Anspruch 8 oder 9, wobei das Fahrzeugkarosserieblech (1) eine oberes Armaturenbrettblech (5) ist, das in einem hinteren Endabschnitt eines Motorraums bereitgestellt ist, und der Fahrzeugkarosserierahmen ein Armaturenbrettquerträgerelement (3; 4) ist, das entlang des oberen Armaturenbrettblechs (5) bereitgestellt ist, um sich in einer Fahrzeugbreitenrichtung zu erstrecken.

11. Herstellungsverfahren einer Fahrzeugkarosserie, die einen flanschlosen hohlen Fahrzeugkarosserierahmen (2; 3; 4), der einen geschlossenen Querschnitt hat, und ein Fahrzeugkarosserieblech (1), das an den Fahrzeugkarosserierahmen (2; 3; 4) geschweißt wird, enthält, das umfasst:
einen Schritt des Ausbildens kleiner Durchgangslöcher (18; 23; 24) an einem an den Fahrzeugkarosserierahmen (2; 3; 4) geschweißten Abschnitt des Fahrzeugkarosserieblechs (1) entlang einer Längsrichtung des Fahrzeugkarosserierahmens (2; 3; 4);
einen Schritt des provisorischen Verbindens des Fahrzeugkarosserierahmens (2; 3; 4) über die kleinen Durchgangslöcher (18; 23; 24) mit dem Fahrzeugkarosserieblech (1); und
einen Schritt des Verbindens des Fahrzeugkarosserierahmens (2; 3; 4) mit dem Fahrzeugkarosserieblech (1) durch Schweißen, wie etwa Laserschweißen, das auf einen spezifischen Abschnitt entlang der kleinen Durchgangslöcher (18; 23; 24), die in dem Ausbildungsschritt der kleinen Durchgangslöcher ausgebildet wurden, angewendet wird,
**dadurch gekennzeichnet, dass** das Fahrzeugkarosserieblech (1) derart ausgebildet wird, dass es einen konkaven Abschnitt (15) an seinem Zwischenabschnitt zwischen den getrennten Punkten des Schweißabschnitts (17) hat, wobei der konkave Abschnitt (15) in Richtung einer Seite, die im Wesentlichen entgegengesetzt zu einer Anordnungsseite des Fahrzeugkarosserierahmens ist, gewölbt ist und sich in der Längsrichtung des Fahrzeugkarosserierahmens (2) erstreckt, und der provisorische Verbindungsabschnitt (16) neben dem konkaven Abschnitt (15) des Fahrzeugkarosserieblechs (1) angeordnet ist.

12. Herstellungsverfahren nach Anspruch 11, wobei der provisorische Verbindungsabschnitt (16) derart ausgebildet ist, dass er auf beiden Seiten des konkaven Abschnitts (15) angeordnet ist.

13. Herstellungsverfahren nach einem der Ansprüche 11 bis 12, wobei der provisorische Verbindungsabschnitt (16) durch Bogenschweißen ausgebildet wird, welches den Fahrzeugkarosserierahmen (2) über kleine Durchgangslöcher (18), die an dem Fahrzeugkarosserieblech (1) ausgebildet sind, und/oder durch einseitiges Punktscheißen, das von einer Seite Fahrzeugkarosserieblechs (1) angewendet wird, mit dem Fahrzeugkarosserieblech (1) verbindet.

## Revendications

1. Structure de carrosserie de véhicule, comprenant :
un châssis de carrosserie de véhicule creux sans bride (2 ; 3 ; 4) qui possède une section transversale fermée ;
un panneau de carrosserie de véhicule (1) soudé audit châssis de carrosserie de véhicule (2 ; 3 ; 4) ;
une portion de connexion temporaire (16 ; 19 ; 20) connectant temporairement une face dudit châssis de carrosserie de véhicule (2 ; 3 ; 4) audit panneau de carrosserie de véhicule (1), la portion de connexion temporaire (16 ; 19 ; 20) comprenant une pluralité de points de connexion qui sont agencés essentiellement le long d'une direction longitudinale du châssis de carrosserie de véhicule (2 ; 3 ; 4) ; et
une portion de soudage (17 ; 21 ; 22) connectant la face dudit châssis de carrosserie de véhicule (2 ; 3 ; 4) audit panneau de carrosserie de véhicule (1) par soudage tel que soudage au laser, la portion de soudage (17 ; 21 ; 22) comprenant une paire de rangées de soudage continues qui sont agencées en des points séparés situés près des extrémités des deux côtés de la face du châssis de carrosserie de véhicule (2 ; 3 ; 4),
**caractérisée en ce que** ledit panneau de carrosserie de véhicule (1) possède une portion concave (15) au niveau d'une portion intermédiaire de celui-ci entre lesdits points séparés de la portion de soudage (17), la portion concave (15) étant concave vers un côté qui est essentiellement opposé à un côté de disposition dudit châssis de carrosserie de véhicule (2) et s'étendant dans la direction longitudinale du châssis de carrosserie de véhicule (2), et ladite portion de connexion temporaire (16) est agencée à côté de ladite portion concave (15) du panneau de carrosserie de véhicule (1).

2. Structure de carrosserie de véhicule selon la revendication 1, dans laquelle ledit châssis de carrosserie de véhicule (2) comprend des premier et second éléments (12, 13) qui ont une section transversale en forme de U et sont connectés l'un à l'autre par le biais d'une portion d'extrémité de connexion de ceux-ci, une face spécifiée du châssis de carrosserie de véhicule (2) qui contient une des portions d'extrémité de connexion des premier et second éléments (12, 13) constitue ladite face du châssis de carrosserie de véhicule (2) devant être connectée au panneau de carrosserie de véhicule (1), et ladite portion concave (15) du panneau de carrosserie de véhicule (1) possède une taille de largeur qui correspond essentiellement à ladite portion d'extrémité de connexion des premier et second éléments (12, 13).

3. Structure de carrosserie de véhicule selon la revendication 1 ou 2, dans laquelle ladite portion de connexion temporaire (16) est agencée des deux côtés de ladite portion concave (15).

4. Structure de carrosserie de véhicule selon la revendication 2 ou 3, dans laquelle lesdits premier et second éléments (12, 13) forment un châssis latéral avant (2) du châssis de carrosserie de véhicule qui s'étend sous une forme courbe lorsqu'il est vu depuis le côté d'un véhicule.

5. Structure de carrosserie de véhicule selon l'une quelconque des revendications 1 à 4, dans laquelle ladite portion de connexion temporaire (16) est formée par soudage à l'arc qui connecte le châssis de carrosserie de véhicule (2) au panneau de carrosserie de véhicule (1) par le biais de petits orifices traversants (18) formés au niveau du panneau de carrosserie de véhicule (1).

6. Structure de carrosserie de véhicule selon l'une quelconque des revendications 1 à 4, dans laquelle ladite portion de connexion temporaire (16) est formée par soudage par points d'un côté qui est appliqué depuis un côté du panneau de carrosserie de véhicule (1).

7. Structure de carrosserie de véhicule selon l'une quelconque des revendications 1 à 6, dans laquelle ladite portion concave (15) du panneau de carrosserie de véhicule (1) possède une section transversale qui est essentiellement de forme trapézoïdale.

8. Structure de carrosserie de véhicule selon la revendication 1, dans laquelle ladite portion de connexion temporaire (16 ; 19 ; 20) est formée par soudage à l'arc qui connecte le châssis de carrosserie de véhicule (2 ; 3 ; 4) au panneau de carrosserie de véhicule (1) par le biais de petits orifices traversants (18 ; 23 ; 24) formés au niveau du panneau de carrosserie de véhicule (1).

9. Structure de carrosserie de véhicule selon la revendication 8, dans laquelle lesdits petits orifices traversants (18 ; 23 ; 24) sont agencés en zigzag essentiellement le long de la direction longitudinale du châssis de carrosserie de véhicule (2 ; 3 ; 4).

10. Structure de carrosserie de véhicule selon la revendication 8 ou 9, dans laquelle ledit panneau de carrosserie de véhicule (1) est un panneau supérieur de tableau de bord (5) qui est prévu au niveau d'une portion d'extrémité arrière d'un espace moteur, et ledit châssis de carrosserie de véhicule est une traverse de tableau de bord (3 ; 4) qui est prévue le long du panneau supérieur de tableau de bord (5) de manière à s'étendre dans le sens de la largeur d'un véhicule.

11. Procédé de fabrication d'une carrosserie de véhicule qui inclut un châssis de carrosserie de véhicule creux sans bride (2 ; 3 ; 4) qui possède une section transversale fermée et un panneau de carrosserie de véhicule (1) qui est soudé au châssis de carrosserie de véhicule (2 ; 3 ; 4), comprenant :
une étape consistant à former une pluralité de petits orifices traversants (18 ; 23 ; 24) au niveau d'une portion soudée du panneau de carrosserie de véhicule (1) au châssis de carrosserie de véhicule (2 ; 3 ; 4) le long d'une direction longitudinale du châssis de carrosserie de véhicule (2 ; 3 ; 4) ;
une étape consistant à connecter temporairement le châssis de carrosserie de véhicule (2 ; 3 ; 4) au panneau de carrosserie de véhicule (5) par le biais des petits orifices traversants (18 ; 23 ; 24) ; et
une étape consistant à connecter le châssis de carrosserie de véhicule (2 ; 3 ; 4) audit panneau de carrosserie de véhicule (1) par soudage tel que soudage au laser, qui est appliqué à une portion spécifiée le long des petits orifices traversants (18 ; 23 ; 24) formés dans ladite étape de formation de petits orifices traversants,
**caractérisé en ce que** ledit panneau de carrosserie de véhicule (1) est formé pour avoir une portion concave (15) au niveau d'une portion intermédiaire de celui-ci entre lesdits points séparés de la portion de soudage (17), la portion concave (15) étant concave vers un côté qui est essentiellement opposé à un côté de disposition dudit châssis de carrosserie de véhicule (2) et s'étendant dans la direction longitudinale du châssis de carrosserie de véhicule (2), et ladite portion de connexion temporaire (16) est agencée à côté de ladite portion concave (15) du panneau de carrosserie de véhicule (1).

12. Procédé de fabrication selon la revendication 11, dans lequel ladite portion de connexion temporaire (16) est formée pour être agencée des deux côtés de ladite portion concave (15).

13. Procédé de fabrication selon l'une quelconque des revendications 11 à 12, dans lequel ladite portion de connexion temporaire (16) est formée par soudage à l'arc qui connecte le châssis de carrosserie de véhicule (2) au panneau de carrosserie de véhicule (1) par le biais de petits orifices traversants (18) formés au niveau du panneau de carrosserie de véhicule (1) et/ou par soudage par points d'un côté qui est appliqué depuis un côté du panneau de carrosserie de véhicule (1).
